# EUROPEAN PATENT APPLICATION

(11) **EP 4 011 196 A1**
(43) Date of publication of application: **15.06.2022**
(21) Application number: 21213219.5
(22) Date of filing: 08.12.2021
(51) Int. Cl.: A01G 9/029, A01G 31/06

(54) **ARRANGEMENT AND METHOD FOR THE CULTIVATION OF CROPS**

(30) Priority: 09.12.2020 SE 2051438
(71) Applicant: Grönska Stadsodling 365 AB, 141 46 Huddinge (SE)
(72) Inventor: LEE, Robin, 14146 Huddinge (SE); OLSSON, Petter, 14146 Huddinge (SE); de BRUN SKANTZ, Natalie, 14146 Huddinge (SE); LUND, Ingrid, 14146 Huddinge (SE); HÄRNVALL, Martin, 14146 Huddinge (SE)
(74) Representative: AWA Sweden AB

(57) **Abstract**

A cultivation trough for the cultivation of crops. The cultivation trough comprising a cultivation trough body, arranged for holding a cultivation substrate and seeds, and having at least one penetration area, arranged for receiving irrigation means through the cultivation trough body. Further, an enclosing material is arranged to seal at least one cultivation area.

Further, the cultivation trough may be arranged upon a cultivation tray, wherein the cultivation tray having penetration means, adapted for providing irrigation. Thus, the penetration means, upon placement of the cultivation trough upon the cultivation tray, the enclosing material may be punctured and irrigation supplied.

## Description

### FIELD OF THE INVENTION

The present invention generally relates to a cultivation trough, a vertical cultivation unit and a plant cultivation method for facilitating the growing of crops

### BACKGROUND

Sustainable production of food is an ever-increasing area of interest. As consumers grow increasingly aware of their effect on the environment, more efficient food production is increasingly requested. Further, consumers are requesting freshly harvested goods and there is currently a large interest in local production and consumption of crops and plants. Growing crops closer to consumption may both decrease transportation needs and may offer the consumer freshly harvested crops. Thus, there is today an increased interest from consumers in urban areas to pursue cultivating their own crops. In an urban environment, naturally this is associated with challenges, for example due to lack of cultivation space. Further, it may be challenging for inexperienced persons to cultivate crops, for example due to a lack of knowledge of the cultivation process.

Vertical cultivation systems are an increasingly popular area for growing crops in urban areas. Vertical cultivation systems may produce more crops on a smaller area, may be especially suitable for indoors use and may offer continuous, year-round, production of crops. However, these are often large in size, intended for industrial production and may be expensive. Further, these systems may require special equipment, plant arrangements and knowledge on cultivation, making them unsuitable for private, or small-scale production.

Hence, there is a wish to provide alternatives to the construction and design of present cultivation systems. More specifically, there is a need for improving the efficiency and simplicity in crops cultivation close to the consumer. There is a need for improving cultivation systems which may be utilized at a consumer's residence, in a store, restaurant or a cultivation facility in an urban area.

Hence, it is an object of the present invention to provide an arrangement and method for cultivation of crops with alternative configurations than the ones described in the prior art, in order to increase usability and efficiency in crops cultivation in urban settings.

### SUMMARY OF THE INVENTION

It is an object of at least some of the embodiments of the present invention to overcome, or at least alleviate, the above-mentioned drawbacks. In particular, it is an object to provide alternative cultivation troughs and cultivation units in order to improve efficiency and make cultivation of crops easier to accomplish. This and other objects are achieved by providing a cultivation trough and system having the features in the independent claims. Preferred embodiments are defined in the dependent claims.

According to a first aspect of the present invention, there is provided a cultivation trough for the cultivation of crops. The cultivation trough comprises a cultivation trough body, formed of a water non-permeable material. The body has a geometrical shape with a first and second side arranged opposite to each other. Further, at least one penetration area, arranged for receiving irrigation means entering the cultivation trough is arranged in at least one of the first and second side of the cultivation trough body.

Further, at least one cultivation area is formed within said cultivation trough body. A cultivation substrate holding seeds, or similar, is arranged in said cultivation area. Further, an enclosing material is arranged to seal said at least one cultivation area to maintain the cultivation substrate in the cultivation area.

It will be appreciated that the present inventive concept comprises a cultivation trough having an enclosing material as this may facilitate simplicity and efficiency in crops cultivation. It will be appreciated that the enclosing material may be arranged in such a manner that the seeds and cultivation substrate is held in place and protected from an unbeneficial environment. For example, seeds may be affected by light, temperature, and humidity. Thus, it will be appreciated that the enclosing material may be protective, for example during transportation and storage. Further, a cultivation tray with an enclosing material maintaining a beneficial environment may be stored for a prolonged time period until a germination process is begun. Further, it may be appreciated that the at least one cultivation area may be adapted for holding a variety of different cultivation substrates, for example soil, cultivation mat or cultivation pad.

It will be appreciated that the present inventive concept comprises at least one penetration area intended for irrigation. Having a penetration area arranged in at least one side of the cultivation trough offers opportunities to simplify the irrigation of the crops, which will be appreciated.

Further, it will be appreciated that a cultivation trough may be supplied with irrigation through the penetration area without having enclosing material removed. This may for example provide a beneficial environment for a germination process and seedling stage. For example, this may be encouraged by keeping the cultivation substrate at a beneficial humidity and temperature.

According to an embodiment of the present invention, the at least one penetration area comprises any combination of a removable material, a rubber material and a material more fragile than the water non-permeable material of said cultivation trough. The present embodiment may be advantageous as the penetration area will be more easily penetrable by irrigation means. It will be appreciated that this configuration may put decreased stress on the penetrating means, as well as the cultivation trough, which for example may increase durability and stability in the cultivation trough and cultivation unit. This embodiment may further make the penetration of the cultivation trough easier to perform, which may increase usability. Further, a rubber material may be advantageous as it may also enclose the penetrating irrigation means in a more efficient manner, thus potentially decreasing the risks of leakage.

According to an embodiment of the present invention, the enclosing material of the cultivation trough is arranged to seal the at least one cultivation area such that the humidity of the environment of the cultivation substrate is essentially constant. The present embodiment may be advantageous as the humidity of the cultivation substrate has a direct effect on the seeds' germination. It will be appreciated that the present embodiment may further increase control of the crops cultivation process, and specifically the crucial germination.

According to an embodiment of the present invention, the enclosing material of the cultivation trough is removably arranged around at least a portion of said cultivation substrate. The present embodiment may be advantageous as it may be beneficial to remove the enclosing material at a given point in the cultivation process. For a growing crop, the enclosing material may become an undesirable barrier. It may thus be advantageous to remove at least a portion of the enclosing material at a given point of the cultivation process. For example, after germination, or after seedling stage. Thus, the removably arranged enclosing material may offer improved conditions and control of the crops cultivation.

According to an embodiment of the present invention, the cultivation trough comprises an enclosing material arranged for allowing germinated seeds or similar to grow through said enclosing material. It will be appreciated that germinated seeds, seedlings or crops may grow through the enclosing material, as this further simplifies the cultivation process, encouraging the cultivation process without adding additional tasks for the cultivator. Further, it may be appreciated that the present embodiment, may increase the automation in the cultivation of crops. Further the embodiment may simplify the cultivation as it may not require knowledge from the cultivator on when the enclosing material preferably should be removed. This may for example be accomplished by having an enclosing material which is thin, porous and/or degrades spontaneously, or is otherwise arranged to facilitate the growth of crops through the material.

According to an embodiment of the present invention, the cultivation trough comprises an enclosing material which is a material essentially non-permeable to light. Having a material essentially non-permeable to light may encourage the seeds in the cultivation tray to be less prone to germination, while the enclosing material is intact, which may lead to possibilities for an increased storage time. It will further be appreciated that the present embodiment further enhances control of the germination process, for example as the germination process may be initiated or encouraged by the removal or degradation of the enclosing material in more efficient manner than with other materials.

According to an embodiment of the present invention, the cultivation trough body comprises a plurality of cultivation areas, preferably 6-12 cultivation areas, wherein the plurality of cultivation areas are formed as recesses that are in fluid connection to one another. Each cultivation area is adapted for receiving and holding a cultivation container with cultivation substrate arranged therein. It will be appreciated that the present embodiment offers opportunities for having a plurality of individual containers, for example pots, with cultivation medium arranged therein. The individual containers may for example facilitate both the sowing and/or the harvesting of the crops. For example, the container may be placed and/or removed individually. Further, the present embodiment may be advantageous in that the cultivation trough may be customized depending on the crops to be grown, which may further enhance the cultivation process. For example, 6-12 cultivation areas may be the most suitable. It will be appreciated that the cultivation areas are in fluid connection with one another, as irrigation supplied to a cultivation area will supply all of the plurality of cultivation areas. Thus, decreasing the need for additional irrigation processes and/or means.

According to an embodiment of the present invention, the cultivation trough has a penetration area arranged on the first side. The cultivation trough further comprises at least one sensor configured to detect the humidity in the cultivation substrate and arranged in connection to the second side, and a control means for determining the need for irrigation of the cultivation substrate based on the output from said at least one sensor.

It will be appreciated that the sensor is arranged on the opposite side as the penetration area. This may aid the control system in determining the need for irrigation in a more accurate manner than other placements of the sensor. This may be due to the sensor not being in direct association to the irrigation means. Further, it will be appreciated that the usability of the system may be further increased as the determination of the need for irrigation is a crucial step in the cultivation of crops. The cultivation process may thus benefit from sensorial feedback for determining irrigation needs which may be difficult to accurately determine for a cultivator. Thus, further usability may be achieved by increased automation, decreasing the need for skills in cultivation as well as the required time of engagement with the crops.

According to a second aspect of the present invention, there is provided a vertical cultivation unit. The vertical cultivation unit comprises a vertically extending structure. In the vertically extending structure, a plurality of guide elements is arranged on a plurality of vertical levels. Further, irrigation supply means is provided.

At least one cultivation tray is arranged upon at least one of the plurality of guide elements. The cultivation tray comprises a support structure which defines a geometrical tray area with a first and second side arranged opposite to each other. Further, a plurality of trough penetration elements connectable to the irrigation supply means are arranged in the support structure. The trough penetration elements are extending inwards from the support structure toward the geometrical tray area.

At least one cultivation trough as described above is arranged upon the at least one cultivation tray such that at least one trough penetration element penetrates the penetration area of the cultivation trough to provide irrigation to the cultivation trough.

It will be appreciated that the cultivation tray comprises penetration means, for example due to the simplicity of which irrigation may be supplied to the cultivation trough. The penetration means, which may be essentially needle-shaped, tubular or any other suitable shape, may be arranged to easily puncture the penetration area, which may increase usability. Further, the irrigation supplied through the at least one penetration area of the cultivation trough may be beneficial in that the cultivation substrate may be kept essentially enclosed by an enclosing material. This may be advantageous as climate control of the cultivation substrate may be improved. For example, the aspects of humidity, light and temperature may be positively affected. In turn this may facilitate the initial stages of crops cultivation, such as the germination. Further, it may be appreciated that the arrangement with irrigation supplied directly into the cultivation trough may improve the usability of the system, for example by simplifying the irrigation process.

It will be appreciated that the cultivation arrangement is configured in a space efficient manner with a relatively low number of components. The compact configuration of the arrangement may provide a possibility to produce a relatively large amount of crops on a relatively small area. Further, it may be advantageous that the arrangement may easily be utilized in a variety of scales, depending on the amount of trays and troughs in use, such that a desirable amount of crops may be grown.

According to an embodiment of the present invention, the cultivation unit further comprises at least one sensor configured to detect the humidity in the cultivation substrate. The sensor is arranged in the cultivation unit, adjacent to the second side of the cultivation trough. And, control means for determining the need for irrigation of the cultivation medium based on the output from said at least one sensor adjacent the cultivation trough. It will be appreciated that the present embodiment includes a sensor arranged in the cultivation unit, as an increased control of irrigation may be achieved. The sensor placement may be advantageous in having the control unit accurately determining the need for irrigation. The control unit may further be arranged such that it automatically controls the supply of irrigation to the trough penetrating means, and thus also to the cultivation area. It will be appreciated that the present embodiment may further increase user-friendliness in that the cultivation process may be further automated and decreased need for user interaction with the cultivation unit may be accomplished. A more accurate amount of irrigation may be supplied, thus, further aiding the cultivation process.

According to an embodiment of the present invention, the vertical cultivation unit comprises storage means, arranged for any combination of features such as water supply, nutrition supply, ventilation means, pH adjuster supply and electronics. It will be appreciated that the current embodiment comprises means for storing at least some of the necessities for crops cultivation. This may further increase the usability of the cultivation unit. For example, the cultivation unit may comprise means for storing water which may be connected to the irrigation supply means and thus also the trough penetration means. The cultivation substrate may thus be irrigated with water from the means for storing. Further, nutrition and pH adjuster may be held in the storage and may be added to the irrigation. Further, ventilation means, such as fans, may be beneficial to the cultivation of crops and may be arranged within the storage. Further the electronics may comprise control means which may be in connection with the sensor and may control the supply of irrigation or any specific feature arranged in the storage means. Thus, it will be appreciated that the present embodiment may further enhance the cultivation process by providing the crops with improved conditions, either manually controlled or automated. This may further facilitate usability of the cultivation unit. Further the storage means may simplify placement of the cultivation unit and decrease the need for further logistics.

According to an embodiment of the present invention, the cultivation tray and cultivation trough are essentially rectangular, and the width of the rectangular cultivation tray is essentially similar to the length of the rectangular cultivation trough. The present embodiment may be advantageous as the number of cultivation troughs arranged upon the cultivation trays may be optimized. It will be appreciated that the embodiment offers an easy-to-use arrangement where the placement of the cultivation troughs on the cultivation trays is easy to perform and offer a stabile arrangement.

According to an embodiment of the present invention, the vertical cultivation unit further comprises at least one visual indication means, such as a light emitting diode (LED), for indicating the status of a crop cultivation process. For example, the LED may indicate seedling stage, crop ready for harvest, malfunctioning, refill of irrigation, nutrition, or any other aspect which may require attention. It will be appreciated that the present embodiment further simplifies the crops cultivation for a cultivator. For example, the LED may indicate if and when the enclosing material is to be removed which may be difficult for a cultivator to determine. Further, signals may indicate malfunctioning or low irrigation levels which further increase usability in the cultivation process. Further, when the crops are ready for harvest the signal may indicate this to the cultivator, further enhancing the usability of the cultivation arrangement.

According to a third aspect of the present inventive concept, there is provided a plant cultivation method for facilitating the growing of crops, comprising the steps of:
a. placing a cultivation trough according to claim 1 on a cultivation tray in a cultivation unit according to claim 9, such that the trough penetration elements is in fluid connection with the cultivation substrate;
b. adding water and/or nutrients through the trough penetration elements, to the cultivation substrate as needed;
c. waiting a predetermined amount of time;
d. enabling seedlings to grow by one of
   removing at least a portion of the enclosing material from the trough, or
   having the enclosing material degrading spontaneously,
e. repeating steps b and/or c as needed
f. harvesting at least one crop in the cultivation trough.

It will be appreciated that the current inventive concept, with the method comprising the steps above, offer a simple method for cultivating crops. The steps presented in the method thus offer plant cultivation suitable to any user, or cultivator, regardless of experience due to its increased usability. Further, the method may be a time-efficient method for a cultivator to grow crops. It will be appreciated that the cultivation method comprises little need for a cultivator to nurse the crops or otherwise interact with the arrangement. This may benefit both the time efficiency and simplicity. It will also be appreciated that the germination process may be more precisely controlled.

It will be appreciated that the cultivation method comprises the steps of either removing at least a portion of the enclosing material from the trough or having the enclosing material degrading spontaneously. Having an enclosing material enclosing the trough may create a more beneficial cultivation environment, especially in the early stages of the cultivation as this may encourage seeds to germinate and seedlings to grow. Having an enclosing material may however constitute an obstacle for larger seedlings, saplings or crops. Thus, it may be appreciated that the enclosing material may be removed from at least a portion of the cultivation or having the enclosing material degrade spontaneously. This may encourage crops to grow freely and/or through the least partially degraded material.

### BRIEF DESCRIPTION OF THE DRAWINGS

The above, as well as additional objects, features and advantages of the present invention, will be better understood through the following illustrative and non-limiting detailed description of embodiments of the present invention. Reference will be made to the appended drawings, on which:
figure 1 is a schematic view of three cultivation troughs, in accordance with embodiments of the invention.
figure 2 is a schematic view of a cultivation trough arranged on a cultivation tray in accordance with an embodiment of the invention;
figure 3 is a schematic view of a cultivation unit comprising a vertical structure and cultivation trays, in accordance with an embodiment of the present invention;

All the figures are schematic, generally not to scale, and generally only show parts which are necessary in order to elucidate the invention, whereas other parts may be omitted or merely suggested.

### DETAILED DESCRIPTION

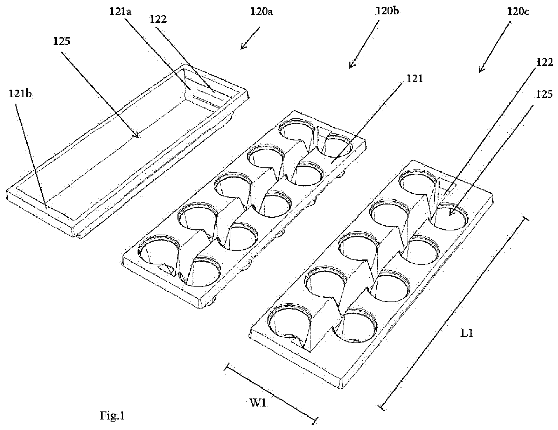

Figure 1 shows three embodiments of cultivation troughs 120a, 120b, 120c. Each of the cultivation troughs depicted are of a rectangular shape, having a width, W1 and a length, L1. Alternative embodiments may however comprise other geometrical shapes. Each of the cultivation troughs comprises a cultivation trough body 121. The cultivation trough body 121 is in this embodiment made out of a plastic material, however other water non-permeable materials, such as aluminum, may be utilized. The cultivation trough body 121 in the embodiment is shown having a first and second side 121a, 121b. On the first side 121a of the cultivation trough body 121, it is shown a penetration area 122, which is intended for receiving irrigation means. The depicted embodiment displays a penetration area 122 which is made from a more porous material than the other parts of the cultivation trough body 121. However, the penetration area of other embodiments may comprise other suitable materials, such as rubber. A porous material may for example increase the usability as it may be more easily penetrable. A rubber material may be beneficial in being more closely arranged around a trough penetration means. Further embodiments may have a trough penetration area 122 made from the same water non-permeable material as the cultivation trough body 121. In such an embodiment it may be beneficial to have a thinner configuration of the material in the intended penetration area 122 than the penetration trough body 121, as it may facilitate the penetration of the trough with the trough penetration means. Further, the penetration area 122 may be accomplished by utilizing a removable material such that the trough body 121 is opened upon removal of the material covering the penetration area 122. Further, the present embodiments show cultivation troughs 120a, 120b, 120c with different numbers of cultivation areas 125. In the figure, 120a is displayed having one cultivation area 125, 120b is shown with ten cultivation areas and 120c having nine cultivation areas 125. Other embodiments may comprise any suitable number of cultivation areas. The number of cultivation areas 125 may be chosen for example depending on the size of the crops to be grown, or a number of crops, for example based on estimated consumption. Each of the cultivation areas 125 in the embodiments shown are arranged to be able to hold a cultivation container. In the present embodiment, the cultivation troughs 120a and 120b are arranged for holding cultivation containers comprising plastic pots. However, other embodiments may be arranged for cultivation containers of other materials or configurations. The cultivation containers may in turn hold soil, or any other medium suitable as a cultivation substrate. This may allow both traditional farming with soil as well as hydroponic faming. Also shown in the present embodiment is the plurality of cultivation areas, in 120b and 120c, in fluid connection with one another. This meaning, irrigation supplied through the penetration area into, or in connection to, a cultivation area will also reach the remaining cultivation areas. The cultivation troughs displayed in the embodiment may also be suitable to hold a cultivation substrate, such as a cultivation pad, or mat, directly in the cultivation area, without the need of a cultivation container. For example, this may be especially suitable for cultivation trough 120a, due to its cultivation area's 125 configuration.

Further, a sensor may be arranged in the second side 121b of the cultivation trough. The sensor may be arranged for determining the humidity in or around at least a portion of the cultivation substrate in the cultivation areas 125 in order to determine the need for irrigation to the trough to ensure the desired growth. Not displayed in the present embodiment is an enclosing material, however at least a portion of the cultivation troughs 120a, 120b, 120c may be enclosed by an enclosing material. The enclosing material is for example made of a plastic film that provides the desired sealing of the cultivation area or areas.

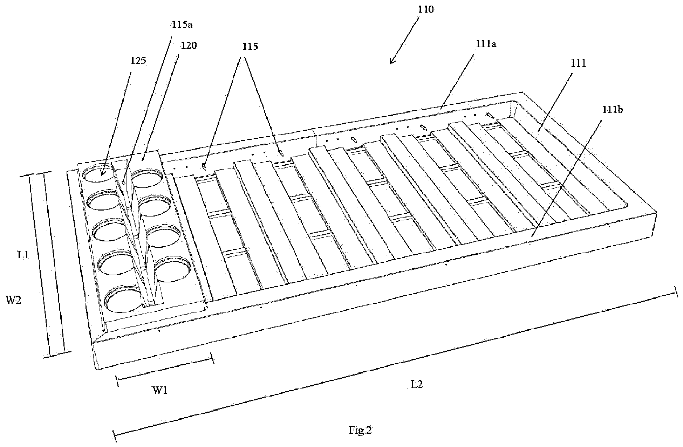

Figure 2 shows an embodiment of a cultivation tray 110, comprising a support structure of a rectangular shape, having a length L2 and a width, W2. The cultivation tray comprises a first side 111a and a second side 111b. Further, it is shown a cultivation trough 120 arranged upon the cultivation tray 110, where the length L1 of the cultivation trough 120 is essentially equal to the width W2 of the cultivation tray 110. It is shown in the embodiment that this configuration may optimize the number of cultivation troughs 120 held on a cultivation tray 110. Further the present embodiment show trough penetration means 115 arranged in the first side 111a of the cultivation trough 110. The trough penetration means 115 are in the present embodiment essentially needle-shaped, whereas other embodiments may comprise trough penetration means 115 which are tube-shaped or of other suitable shapes for penetration of the cultivation trough and irrigation supply thereto. The penetration means 115a is in the present embodiment shown puncturing the penetration area 122 of the cultivation trough 120. The remaining penetration means 115 may be arranged for penetrating other cultivation troughs placed upon the cultivation tray 110. The number of cultivation troughs 120 intended to be arranged on the cultivation tray 110 may advantageously be corresponding to the number trough penetration means 115 arranged in the cultivation tray 110. The trough penetration means 115 are further arranged to reach into the cultivation trough such that the plurality of cultivation areas 125 of the cultivation troughs 120 are in fluid connection with the trough penetrating means 115. Further, the trough penetration means 115 may be arranged for providing the plurality of cultivation areas 125 with irrigation. Thus, in the present embodiment it is shown that upon placement of the cultivation trough 120 on the cultivation tray 110, the penetration means 115 may both penetrate an enclosing material as well as supply the cultivation areas 125 with irrigation. Further, the enclosing material may be beneficially kept in place, essentially enclosing the cultivation substrate after it has been punctured. For example, the enclosing material is a plastic film which may benefit the humidity in the cultivation areas.

Further, a sensor may be arranged in the second side 112b of the cultivation tray. The sensor may be arranged for determining the humidity in or around at least a portion of the cultivation substrate. The output from the sensor may be utilized for determining the need for irrigation supplied by the trough penetration means 115 to the cultivation areas 125.

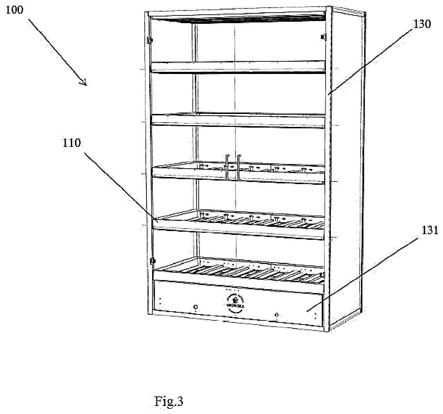

Figure 3 shows a cultivation unit 100 embodied as a cabinet. The cultivation unit comprising a vertical structure 130. The present embodiment shows a vertically extending structure arranged with guide elements for holding five cultivation trays 110, on different vertical levels. Other embodiments may comprise a vertical structure 130 comprising any suitable number of guide elements for holding cultivation trays 110 in the cultivation unit 100. The number of guide elements may for example be chosen depending on the type and number of crops desired for cultivation and the space available. As previously described, each tray may hold a number of cultivation troughs. The vertical structure 130 of the present embodiment comprises glass doors, which may further increase the beneficial climate of the cultivation unit 100. However, other embodiments may be arranged with doors made from other materials or without doors altogether. The present embodiment further shows a storage means 131 in the bottom of the vertical structure 130. In the present embodiment, the storage means 131 holds control means for determining the need for irrigation. This may be determined based on the output from a sensor which may be arranged in or adjacent to the cultivation trough. The storage means 131 in this example further comprises means for storing water, pH adjuster and nutrition. This may be used in any suitable combination in irrigation. The irrigation in the present embodiment is supplied from the storage means 131, via irrigation supply means, to trough penetration means arranged in the cultivation trays 110, as previously described. The irrigation is in the present embodiment automatically controlled, by the control means and sensor output. The automatic control of irrigation may both control the ratio of nutrition, pH adjuster and water as well as the amount of irrigation delivered from the storage compartment 131 of the vertical structure 130 to the crops to be cultivated. Other embodiments may utilize manual control for irrigation. Further, light emitting diodes arranged in the cultivation unit 100 in this embodiment may indicate when the crops are ready for harvest.

While the invention has been illustrated and described in detail in the drawings and foregoing description, such illustration and description are to be considered illustrative or exemplary and not restrictive; the invention is not limited to the disclosed embodiments. The skilled person understands that many modifications, variations and alterations are conceivable within the scope as defined in the appended claims.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A cultivation trough (120) for the cultivation of crops, comprising a cultivation trough body (121), formed of a water non-permeable material, said body has a geometrical shape with a first and second side (121a, 121b) arranged opposite to each other, comprising:
at least one penetration area (122) intended for irrigation means entering the cultivation trough (120), said penetration area (122) is arranged in at least one of the first and second side (121a, 121b) of the cultivation trough body (121);
at least one cultivation area (125) formed within said cultivation trough body (121);
a cultivation substrate holding seeds, or similar, and arranged in said cultivation area (125); and
an enclosing material arranged to seal said at least one cultivation area (125) to maintain the cultivation substrate in the cultivation area (125).

2. The cultivation trough (120) according to claim 1, wherein the at least one penetration area (122) comprises any combination of a removable material, a rubber material and a material more fragile than the water non-permeable material of said cultivation trough (120).

3. The cultivation trough (120) according to claim 1 or 2, wherein the enclosing material is arranged to seal the at least one cultivation area (125) such that the humidity of the environment of the cultivation substrate is essentially constant.

4. The cultivation trough (120) according to any preceding claim, wherein the enclosing material is removably arranged around at least a portion of said cultivation substrate.

5. The cultivation trough (120) according to any preceding claim, wherein the enclosing material is porous and/or degrades spontaneously and arranged for allowing germinated seeds or similar to grow through said enclosing material.

6. The cultivation trough (120) according to any preceding claim, wherein the enclosing material is a material essentially non-permeable to light.

7. The cultivation trough (120) according to any preceding claim, wherein the cultivation trough body (121) comprises a plurality of cultivation areas (125), preferably 6-12 cultivation areas (125), wherein the plurality of cultivation areas (125) are formed as recesses that are in fluid connection to one another, and each cultivation area (125) is adapted for receiving and holding a cultivation container with cultivation substrate arranged therein.

8. The cultivation trough (120) according to any preceding claim, wherein the penetration area (122) is arranged on the first side (121a), said cultivation trough (120) further comprising:
at least one sensor configured to detect the humidity in the cultivation substrate and arranged in connection to the second side (121b); and
control means for determining the need for irrigation of the cultivation substrate based on the output from said at least one sensor.

9. A vertical cultivation unit (100), comprising
a vertically extending structure (130) wherein a plurality of guide elements is arranged on a plurality of vertical levels,
irrigation supply means;
at least one cultivation tray (110) arranged upon at least one of the plurality of guide elements, wherein the cultivation tray (110) comprises:
a support structure defining a geometrical tray area with a first and second side (111a, 111b) arranged opposite to each other,
a plurality of trough penetration elements (115) connected to the irrigation supply means, and arranged in the support structure, extending inwards from the support structure toward the geometrical tray area;
at least one cultivation trough (120) according to claim 1, arranged upon the at least one cultivation tray (110) such that at least one trough penetration element (115) penetrates the penetration area (122) of the cultivation trough (120) to provide irrigation to the cultivation trough (120).

10. The vertical cultivation unit (100) according to claim 9, further comprising at least one sensor configured to detect the humidity in the cultivation substrate and arranged in the vertical cultivation unit (100), adjacent to the second side (121b) of the cultivation trough (120); and control means for determining the need for irrigation of the cultivation medium based on the output from said at least one sensor adjacent the cultivation trough (120).

11. The vertical cultivation unit (100) according to any of the claims 9-10, wherein the vertical cultivation unit (100) comprises storage means (131), arranged for any combination of features such as water supply, nutrition supply, ventilation means, pH adjuster supply and electronics.

12. The vertical cultivation unit (100) according to any of the claims 9-11, wherein
the cultivation tray (110) and cultivation trough (120) are essentially rectangular; and
the width of the rectangular cultivation tray (110) is essentially similar to the length of the rectangular cultivation trough (120).

13. The vertical cultivation unit (100) according to any of the claims 9-12, further comprising at least one visual indication means, such as a light emitting diode (LED), for indicating the status of a crop cultivation process, for example seedling stage, crop ready for harvest, or malfunctioning.

14. A plant cultivation method for facilitating the growing of crops, comprising the steps of:
a. placing a cultivation trough (120) according to claim 1 on a cultivation tray (110) in a vertical cultivation unit (100) according to claim 9, such that the trough penetration elements (115) is in fluid connection with the cultivation substrate;
b. adding water and/or nutrients through the trough penetration elements (115), to the cultivation substrate as needed;
c. waiting a predetermined amount of time;
d. enabling seedlings to grow by one of removing at least a
portion of the enclosing material from the cultivation trough (120), or
having the enclosing material degrading spontaneously;
e. repeating steps b and/or c as needed; and
f. harvesting at least one crop in the cultivation trough (120).
